# EUROPEAN PATENT SPECIFICATION

(11) **EP 3 054 634 B1**
(45) Date of publication and mention of the grant of the patent: **11.10.2017**
(21) Application number: 15191575.8
(22) Date of filing: 27.10.2015
(51) Int. Cl.: H04L 12/715, H04L 12/18, H04L 12/753, H04L 12/801, G06F 9/38, H04L 12/773, H04L 12/933

(54) **SCHEME FOR PERFORMING ONE-PASS TUNNEL FORWARDING FUNCTION ON TWO-LAYER NETWORK STRUCTURE**
SCHEMA ZUR DURCHFÜHRUNG EINER ONE-PASS-TUNNEL-WEITERLEITUNGSFUNKTION AUF EINER ZWEISCHICHTIGEN NETZWERKSTRUKTUR
SCHÉMA POUR EFFECTUER UNE FONCTION DE TRANSFERT TUNNEL MONOPASSE SUR UNE STRUCTURE DE RÉSEAU À DEUX COUCHES

(30) Priority: 04.02.2015 US 201562111701 P; 14.09.2015 US 201514852634
(43) Date of publication of application: 10.08.2016
(73) Proprietor: Nephos (Hefei) Co. Ltd., Hefei Anhui (CN)
(72) Inventor: YOUNG, Chang-Due, Kaohsiung City 830 (TW); LU, Kuo-Cheng, Hsinchu City 300 (TW)
(74) Representative: Hoefer & Partner Patentanwälte mbB

(56) References cited:
- Ankur Singla ET AL: "Architecture Documentation - OpenContrail Architecture Document", , 24 January 2015 (2015-01-24), pages 1-35, XP055282550, Retrieved from the Internet: URL:https://web.archive.org/web/2015012411 3037/http://opencontrail.org/opencontrail- architecture-documentation/ [retrieved on 2016-06-22]
- YAXUAN QI ET AL: "Multi-dimensional packet classification on FPGA: 100 Gbps and beyond", FIELD-PROGRAMMABLE TECHNOLOGY (FPT), 2010 INTERNATIONAL CONFERENCE ON, IEEE, PISCATAWAY, NJ, USA, 8 December 2010 (2010-12-08), pages 241-248, XP031844474, ISBN: 978-1-4244-8980-0
- T. Narten ET AL: "RFC 7364 - Problem Statement: Overlays for Network Virtualization", , 30 October 2014 (2014-10-30), pages 1-23, XP055282201, Retrieved from the Internet: URL:https://tools.ietf.org/html/rfc7364 [retrieved on 2016-06-21]

## Description

The present invention relates to a system running a device within a data center, a method used within a data center, and a controller used by a system running a device within a data center, according to the pre-characterizing clauses of claims 1, 10, and 19.

Generally speaking, network visualization can be achieved by establishing a tunnel across a public network such as a cloud network to send packet(s) from an end point to a remote end point. Tunneling can provide virtual private network (VPN) services for users. Routing nodes or bridges in the public network are unaware that the transmission is part of a private network. Tunneling can allow the use of the Internet to convey data on behalf of the private network. However, existing tunneling schemes cannot provide better performance.

The article "Architecture Documentation - OpenContrail Architecture Document" by Ankur Singla et al. discloses a router having separate forwarding tables for a underlay network and a virtual network. The article "Multi-dimensional Packet Classification on FPGA: 100Gbps and Beyond" by Yaxuan et. al discloses a method for parallel accessing a RAM.

This in mind, the present invention aims at providing a novel system, method, and corresponding controller for performing packet encapsulation and transmission by providing/executing one-pass tunnel forwarding scheme/function on a two-layer network structure.

This is achieved by a system according to claim 1, a method according to claim 8, and a controller according to claim 12. The respective dependent claims pertain to corresponding further development and improvements.

As will be seen more clearly from the detailed description following below, the system running a device within a data center with reference to claim 1 includes a first table, a second table, and a controller. The first table includes forwarding information of at least one station corresponding to an overlay network structure. The second table includes forwarding information of at least one station corresponding to an underlay network structure. The controller, couple to the first and second tables and configured for: receiving a packet; computing a specific overlay path/tree and a specific underlay path/tree according to the first table, the second table, and a destination to transmit the packet; obtaining information of an overlay next hop station and information of an underlay next hop station according to the specific overlay path/tree and the specific underlay path/tree; and, performing packet encapsulation and transmission for the packet according to the information of the overlay next hop station and the information of the underlay next hop station.

As will be seen more clearly from the detailed description following below, the method used within a data center with reference to claim 10 includes: receiving a packet; computing a specific overlay path/tree and a specific underlay path/tree according to a destination to transmit the packet, a first table, and a second table, wherein the first table includes forwarding information of at least one station corresponding to an overlay network structure, and the second table includes forwarding information of at least one station corresponding to an underlay network structure; obtaining information of an overlay next hop station and information of an underlay next hop station according to the specific overlay path/tree and the specific underlay path/tree; and, performing packet encapsulation and transmission for the packet according to the information of the overlay next hop station and the information of the underlay next hop station.

As will be seen more clearly from the detailed description following below, the controller used by a system running a device within a data center with reference to claim 19 includes a processing circuit and an output circuit. The processing circuit is configured for receiving a packet, computing a specific overlay path/tree and a specific underlay path/tree according to a destination to transmit the packet, a first table, and a second table, obtaining information of an overlay next hop station and information of an underlay next hop station according to the specific overlay path/tree and the specific underlay path/tree, and performing packet encapsulation for the packet according to the information of the overlay next hop station and the information of the underlay next hop station. The output circuit is coupled to the processing circuit and configured for transmitting the encapsulated packet. The first table includes forwarding information of at least one station corresponding to an overlay network structure, and the second table includes forwarding information of at least one station corresponding to an underlay network structure.

In the following, the invention is further illustrated by way of example, taking reference to the accompanying drawings. Thereof
FIG. 1 is a systematic diagram showing the flowchart of a system according to an embodiment of the present invention.
FIG. 2 is a diagram of an embodiment of the system as shown in FIG. 1.
FIG. 3 is a diagram of a hardware embodiment of the controller as shown in FIG. 2.
FIG. 4 is a diagram showing a first example scenario of the present invention for L3 network topology.
FIG. 5 is a diagram showing a second example scenario of the present invention for L2 network topology.
FIG. 6 is a systematic diagram showing the flowchart of a system according to another embodiment of the present invention.
FIG. 7 is a diagram showing a dual-port memory device comprising first and second tables according to an embodiment.
FIG. 8 is a diagram showing an example scenario of the present invention for multicast transmission of packets on L3 network topology.
FIG. 9 and FIG. 10 are diagrams respectively showing examples of different forwarding trees for multicast transmission as shown in FIG. 8.

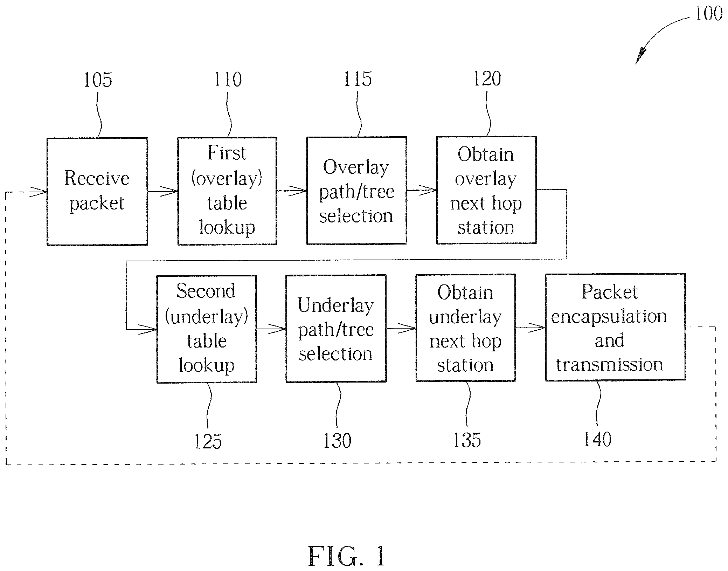

Please refer to FIG. 1, which is a systematic diagram showing the flowchart of a system 100 according to an embodiment of the present invention. The system 100 is arranged to run on a switch device (or a router device) within a data center, can be implemented by using a single integrated circuit chip, and is capable of providing/executing a one-pass tunnel forwarding scheme/function on a two-layer network structure (including structures of overlay network and underlay network). One-pass means that the system 100 can process/encapsulate packets within a single one switch device without using two switch devices and without re-circuiting an output of a device back to the input of the device. This reduces circuit costs. Tunnel forwarding means that the system 100 can establish data tunnel (s) for unicast/multicast/broadcast traffic flows to provide virtual private network (VPN) and network virtualization services.

The overlay network for example can be a virtual private tunnel between a local data center and a remote data center, and is implemented on top of an existing physical network. The overlay network may employ an overlay table storing any kinds of reference information for the overlay network to transfer packet(s). For example, the overlay table includes inner (i.e. overlay) header information such as VLAN ID, forwarding domain (FD) ID, MAC address, virtual routing forwarding (VRF), IP address, and/or IP prefix. For instance, for L3 overlay network, information of VRF or Destination IP address can be used to search the overlay table so as to obtain a lookup result (i.e. next hop information) such as remote TEP (Tunnel Endpoint) ID or Tunnel ID (for single path or multiple path after ECMP path selection). For L2 overlay network, information of FD ID or Destination MAC address can be used to search the overlay table so as to obtain a lookup result (i.e. next hop information) such as TRILL Pseudo nickname or MC_LAG ID (for single path or multiple path after ECMP path selection).

The underlay network for example can be a public core network including multiple switch devices, and is reconfigured to provide the paths required to provide the inter-endpoint network connectivity. The underlay network may employ an underlay table storing any kinds of reference information for the underlay network to transfer packet(s). For example, the underlay table includes outer (i. e. underlay) header information such as VLAN ID, forwarding domain (FD) ID, MAC address, virtual routing forwarding (VRF), IP address, IP prefix, TRILL Pseudo nickname, MC_LAG ID, TEP (Tunnel Endpoint) ID, and/or Tunnel ID. For instance, the TRILL based underlay network can employ information of Routing Bridge ID (RB ID) as reference. Alternatively, the MPLS based underlay network can employ information of MPLS labels as reference. For instance, for L3 underlay network, information of TEP_ID or Tunnel ID can be used to search the underlay table so as to obtain a lookup result (i.e. next hop information) such as Next hop transit router information (e.g. the MAC address and the egress interface for the next hop router) (for single path or multiple path after ECMP path selection). For L2 underlay network, information of TRILL Pseudo nickname or MC_LAG ID can be used to search the underlay table so as to obtain a lookup result (i.e. next hop information) such as Next hop transit router information (e.g. the MAC address and the egress interface for the next hop router) (for single path or multiple path after ECMP path selection).

Provided that substantially the same result is achieved, the steps of the flowchart shown in FIG. 1 need not be in the exact order shown and need not be contiguous, that is, other steps can be intermediate. Steps of FIG. 1 are detailed in the following:
Step 105: receiving a packet;
Step 110: looking up a first table according to a destination to transmit the packet, to obtain information of at least one overlay station;
Step 115: selecting a specific overlay path/tree among at least one overlay path/tree formed by the at least one overlay station;
Step 120: obtaining information of an overlay next hop station according to the specific overlay path/tree;
Step 125: looking up a second table according to the information of the overlay next hop station, to obtain information of at least one underlay station;
Step 130: selecting a specific underlay path/tree among at least one underlay path/tree formed by the at least one underlay station;
Step 135: obtaining information of an underlay next hop station according to the specific underlay path/tree; and
Step 140: performing packet encapsulation and transmission for the packet according to the information of the overlay
next hop station and the information of the underlay next hop station.

In this embodiment, the first table is a forwarding table (or can be regarded as a routing database) for the overlay network and comprises/stores reference information for the overlay network to transfer packet (s) . For instance, the first table comprises forwarding information of station(s) corresponding to the overlay network. The first table may comprise information index such as identifier (ID) and/or address of station(s) and network prefixes of the overlay network structure (i.e. same modification for the underlay network structure). The second table is a forwarding table (or can be regarded as a routing database) for an underlay network and comprises/stores reference information for the underlay network to transfer packet(s). For instance, the second table comprises forwarding information of station(s) corresponding to the underlay network structure. The second table may comprise information index such as identifier (ID) and/or address of a station on the underlay network structure. In addition, the forwarding information comprised by the first table and the forwarding information comprised by the second table may correspond to Internet Protocol addresses (IP addresses), IP identifications (ID), or IP prefix respectively.

Alternatively, the forwarding information comprised by the first table and the forwarding information comprised by the second table may correspond to MAC (media access control) addresses or MAC identifications, respectively. Alternatively, the forwarding information comprised by the first table may comply with one format of IP network specification and MAC network specification, and the forwarding information comprised by the second table may comply with the other format of the IP network specification and MAC network specification. That is, both the forwarding information comprised by the first table and the forwarding information comprised by the second table can be implemented by using/providing IP addresses, IP identifications, MAC addresses, MAC identifications, or any one format combination of IP network specification and MAC network specification.

In addition, an overlay station means a station on the overlay network structure, and correspondingly an underlay station indicates a station on the underlay network structure. The above-mentioned path/tree means a forwarding path/tree, and the system 100 is capable of selecting a shortest-path forwarding path/tree and/or selecting a load-balancing based forwarding path/tree for a case of equal-cost-multiple-path (ECMP) path/tree. The above-mentioned overlay path/tree means a forwarding path/tree on the overlay network structure, and the underlay path/tree means a forwarding path/tree on the underlay network structure. The system 100 can make routing/forwarding decisions on the overlay network structure and underlay network structure based on a variety of kinds of routing/forwarding protocols and/or based on different requirements for quality of service. In addition, an overlay next hop station indicates a next hop station on the overlay network structure, and this station is determined after computing and selecting the specific overlay path/tree. An underlay next hop station indicates a next hop station on the underlay network structure, and this station is determined after computing and selecting the specific underlay path/tree.

After obtaining the information of overlay next hop station and the information of underlay next hop station, the system 100 is arranged for encapsulating data of the packet with the information and transmitting the encapsulated packet. Thus, by steps of FIG. 1, the system 100 provides overlay header forwarding lookup (looking up the first table) as well as underlay header forwarding lookup (looking up the second table) during a single packet processing procedure for encapsulation of the received packet. Compared with conventional schemes, the system 100 can reduce longer latency and save internal bandwidth without losing the capability of multi-path load balance or load sharing. Additionally, the forwarding information stored by the first table can comply with IP network specification or data-link-layer network such as MAC network specification and the forwarding information stored by the second table can comply with IP network specification or data-link-layer network such as MAC network specification. Thus, the system 100 is capable of supporting L2/L3 overlay network and L2/L3 underlay network.

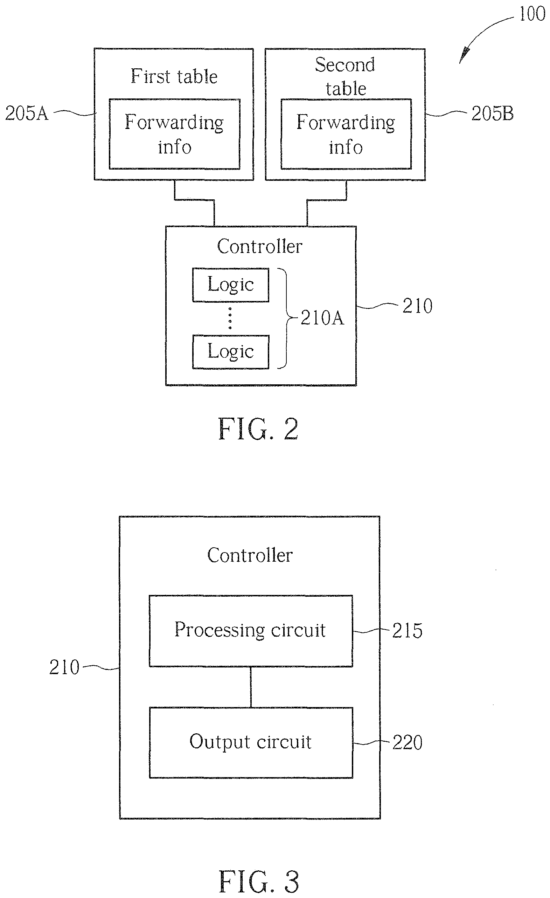

FIG. 2 is a diagram of an embodiment of the system 100 as shown in FIG. 1. The system 100 comprises a first table 205A, a second table 205B, and a controller 210. The first table 205A is a forwarding/routing table for the overlay network structure and comprises/stores forwarding information of the overlay network structure. The second table 205B is a forwarding/routing table for the underlay network structure and comprises/stores forwarding information of the underlay network structure. The controller 210 is coupled to the first table 205A and second table 205B, and comprises corresponding multiple logics 210A adapted for performing Steps 105-140 of FIG. 1. For example, the logics 210A may include eight logics for respectively performing/executing operations of Steps 105-140 of FIG. 1, and the eight logics can be formed by a pipeline mechanism to process incoming data simultaneously. This makes that ideally no logics will be idle. In addition, the multiple logics can be implemented by an entirely software embodiment (including firmware, resident software, micro-code, etc.) or an embodiment combining software and hardware aspects that may all generally be referred to as "module." The first table 205A and second table 205B can be implemented by using identical or different memory devices. This is not intended to be a limitation of the present invention.

In addition, the controller 210 can be implemented by using an entirely hardware embodiment. FIG. 3 is a diagram of a hardware embodiment of the controller 210 as shown in FIG. 2 . The controller 210 comprises a processing circuit 215 and an output circuit 220. The processing circuit 215 is configured to perform Steps 105-135 and the encapsulation operation of Step 140, and the output circuit 220 is coupled to the processing circuit 215 and configured to perform the transmission operation of Step 140 for packets. This also fails within the scope of the present invention.

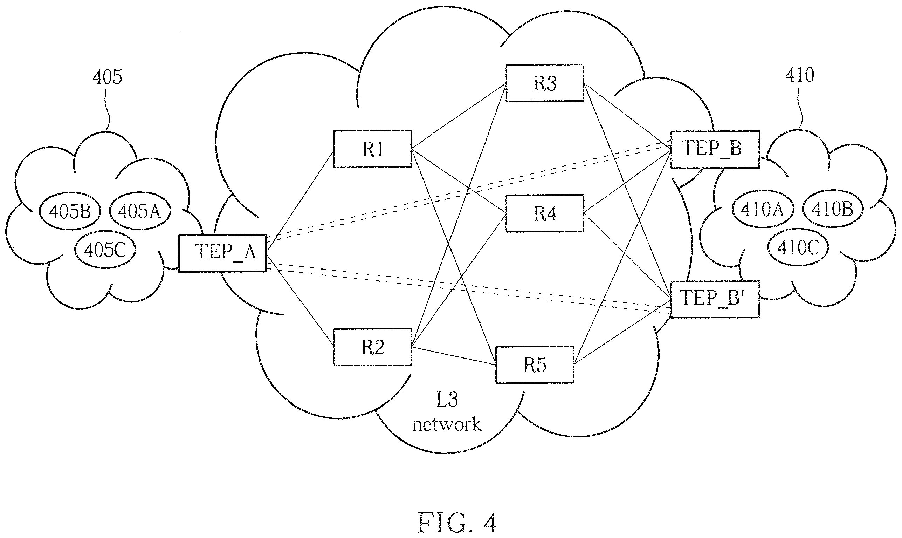

Several different scenarios are provided in this paragraph and the following paragraphs. FIG. 4 shows a first example scenario of the present invention for L3 network topology. As shown in FIG. 4, the net 405 comprises three subnets 405A, 405B, 405C, and the net 410 comprises 410A, 410B, 410C. Switch devices TEP_A, TEP_B, TEP_B' are respectively connected between nets and the cloud network. The cloud network for example comprises multiple transit routers R1-R5. For the underlay network structure, the switch devices TEP_A, TEP_B, TEP_B' are used as roles of transit routers like R1-R5. For the overlay network structure, the switch devices TEP_A, TEP_B, TEP_B' are used as roles of tunnel end points for performing tunnel initiation and termination. For example, the tunnel end point TEP_A performs tunnel initiation and the tunnel end point TEP_B performs tunnel termination so that TEP_A and TEP_B can establish a tunnel for providing data transmission services (e.g. VPN service) for two subnets located within different nets 405 and 410. In another example, the tunnel end points TEP_A and TEP_B' can establish another tunnel.

The system 100 can be applied to a switch device such as any one of TEP_A, TEP_B, TEP_B'. For example, a packet may be generated from a source such as subnet 405A to a remote destination such as subnet 410A. Taking an example of switch device TEP_A, the system 100 (or controller 210) is arranged to run on the switch device TEP_A. Specifically, the controller 210 receives the packet (Step 105). The controller 210 then looks up the first table 205A according to the destination (i.e. subnet 410A) to transmit the packet, to obtain forwarding information of at least one overlay station. In this example, the controller 210 obtains information of two overlay stations, i.e. the tunnel end points TEP_B and TEP_B'. The controller 210 knows that the packet can be sent to the subnet 410A via either tunnel end point TEP_B or tunnel end point TEP_B'. For tunnel end points TEP_A, two different overlay forwarding paths are formed wherein one forwarding path is from TEP_A to TEP_B and the other forwarding path is from TEP_A to TEP_B' The controller 210 may select a shortest-path forwarding path as the specific overlay path if costs of the two forwarding paths are different.

Alternatively, the controller 210 may select an equal-cost-multiple-path (ECMP) forwarding path as the specific overlay path based on load-balancing scheme and/or load sharing schemes if costs of the two forwarding paths are identical. Alternatively, if only one of the tunnel end points TEP_B, TEP_B' exists, the controller 210 may select/determine a single one forwarding path as the specific overlay path. For example, in this scenario, the controller 210 decides the forwarding path from TEP_A to TEP_B as the specific overlay path. Then, based on the determined specific overlay path, the controller 210 obtains information (e.g. index and/or address) of an overlay next hop station such as tunnel end point TEP_B. It should be noted that the overlay next hop station may be another tunnel end point in another scenario if the determined specific overlay path comprises intermediate tunnel end point(s).

After obtaining the information (e.g. index, identifier (s) and/or address) of the overlay next hop station (i.e. tunnel end point TEP_B), the controller 210 looks up the second table according to the information of the tunnel end point TEP_B, to obtain information of at least one underlay station. The at least one underlay station forms at least one underlay forwarding path. In this scenario, as shown in FIG. 4, the controller 210 may find/obtain two forwarding paths on the underlay network structure after looking up the second table 205B wherein one forwarding path may comprise the transit router R1 as a next hop station and the other forwarding path may comprise another transit router R2 as a next hop station. The controller 210 knows that the packet can sent to the tunnel end point TEP_B via any one of the two forwarding paths, and then selects one forwarding path among the two forwarding paths as the specific underlay path. The controller 210 may select a shortest-path forwarding path as the specific overlay path if costs of the two forwarding paths are different. Alternatively, the controller 210 may select one of equal-cost-multiple-path (ECMP) forwarding paths as the specific forwarding path based on load-balancing scheme and/or load sharing schemes if costs of the two forwarding paths are identical. Alternatively, if only single one forwarding path is found, the controller 210 may select/determine this single one forwarding path as the specific underlay path. For example, in this scenario, the controller 210 decides the forwarding path comprising the next hop station R1 as the specific overlay path.

After determining the specific overlay path, the controller 210 can obtain the information of an underlay next hop station (i.e. transit router R1) based on the specific overlay path. Finally, the controller 210 performs packet encapsulation and transmission for the packet according to the information of the overlay next hop station (e.g. tunnel end point TEP_B) and the information of underlay next hop station (e.g. transit router R1).

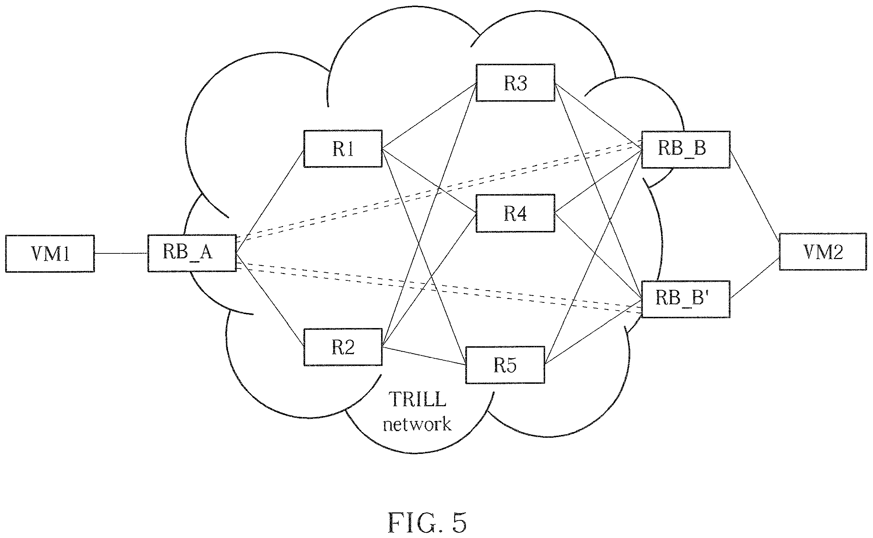

Alternatively, the system 100 can be applied into data-link-layer network such MAC network. FIG. 5 shows a second example scenario of the present invention for L2 network topology (TRILL (Transparent Interconnection of Lots of Links) network topology). As shown in FIG. 5 , routing bridge RB_A (or called switch device) is connected between virtual machine VM1 and the cloud network, and routing bridges RB_B, RB_B' are respectively connected between virtual machine VM2 and the cloud network. The cloud network for example comprises multiple transit routing bridges RB1-RB5. For the underlay network structure, routing bridges RB_A, RB_B, RB_B' are used as roles of transit routing bridges like RB1-RB5. For the overlay network structure, routing bridges RB_A, RB_B, RB_B' are used as roles of tunnel end points for performing tunnel initiation and termination. For example, the tunnel end point RB_A as an ingress routing bridge performs tunnel initiation and the tunnel end point RB_B as an egress routing bridge performs tunnel termination so that RB_A and RB_B can establish a tunnel (shown by dotted lines) for providing data transmission services for virtual machines VM1 and VM2. In another example, the tunnel end points RB_A and RB_B' can establish another tunnel (shown by dotted lines).

The system 100 can be applied to a routing bridge such as any one of RB_A, RB_B, RB_B'. For example, a packet may be generated from virtual machine VM1 to a remote destination such as virtual machine VM2. Taking an example of routing bridge RB_A, the system 100 (or controller 210) is arranged to run on the routing bridge RB_A. Specifically, the controller 210 receives the packet (Step 105). The controller 210 then looks up the first table 205A according to the destination (i.e. virtual machine VM2) to transmit the packet, to obtain forwarding information of at least one overlay station. In this example, the controller 210 obtains information of two overlay stations, i.e. the routing bridges RB_B and RB_B'. The controller 210 knows that the packet can be sent to the virtual machine VM2 via either RB_B or RB_B'. For routing bridge RB_A, two different overlay forwarding paths are formed wherein one forwarding path is from RB_A to RB_B and the other forwarding path is from RB_A to RB_B'. The controller 210 may select a shortest-path forwarding path as the specific overlay path if costs of the two forwarding paths are different.

Alternatively, the controller 210 may select an equal-cost-multiple-path (ECMP) forwarding path as the specific overlay path based on load-balancing scheme and/or load sharing schemes if costs of the two forwarding paths are identical. Alternatively, if only one of routing bridges RB_B, RB_B' exists, the controller 210 may select/determine a single one forwarding path as the specific overlay path. For example, in this scenario, the controller 210 decides the forwarding path from RB_A to RB_B as the specific overlay path. Then, based on the determined specific overlay path, the controller 210 obtains information (e.g. index and/or address) of an overlay next hop station such as routing bridge RB_B. It should be noted that the overlay next hop station may be another routing bridge in another scenario if the determined specific overlay path comprises intermediate routing bridge(s).

After obtaining the information (e.g. index, identifier (s) and/or address) of the overlay next hop station (i.e. routing bridge RB_B), the controller 210 looks up the second table according to the information of routing bridge RB_B, to obtain information of at least one underlay station. The at least one underlay station forms at least one underlay forwarding path. In this scenario, as shown in FIG. 5, the controller 210 may find/obtain two forwarding paths on the underlay network structure after looking up the second table 205B wherein one forwarding path may comprise the transit routing bridge RB1 as a next hop station and the other forwarding path may comprise another transit routing bridge RB2 as a next hop station. The controller 210 knows that the packet can sent to the routing bridge RB_B via any one of the two forwarding paths, and then selects one forwarding path among the two forwarding paths as the specific underlay path. The controller 210 may select a shortest-path forwarding path as the specific overlay path if costs of the two forwarding paths are different.

Alternatively, the controller 210 may select one of equal-cost-multiple-path (ECMP) forwarding paths as the specific forwarding path based on load-balancing scheme and/or load sharing schemes if costs of the two forwarding paths are identical. Alternatively, if only single one forwarding path is found, the controller 210 may select/determine this single one forwarding path as the specific underlay path. For example, in this scenario, the controller 210 decides the forwarding path comprising the next hop station RB1 as the specific underlay path.

After determining the specific underlay path, the controller 210 can obtain the information of an underlay next hop station (i.e. transit routing bridge RB1) based on the specific underlay path. Finally, the controller 210 performs packet encapsulation and transmission for the packet according to the information of the overlay next hop station (e.g. routing bridge RB_B) and the information of underlay next hop station (e.g. transit routing bridge RB1).

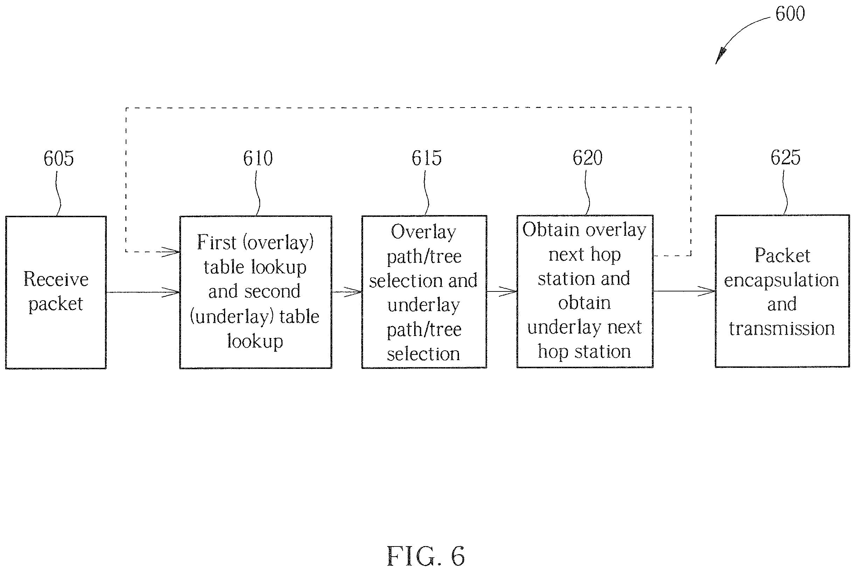

Additionally, the above-mentioned first and second tables can be stored by using a single dual-port memory device. The operations of looking up the first table and looking up the second table can be simultaneously performed. FIG. 6 is a systematic diagram showing the flowchart of a system 600 according to another embodiment of the present invention. The system 600 is arranged to run on a switch device or a router device within a data center, implemented by using a single integrated circuit chip, and is capable of providing a one-pass tunnel forwarding scheme/function on the two-layer network structure (including structures of overlay network and underlay network). Provided that substantially the same result is achieved, the steps of the flowchart shown in FIG. 6 need not be in the exact order shown and need not be contiguous, that is, other steps can be intermediate. Steps of FIG. 6 are detailed in the following:
Step 605: receiving packets P1 and P2;
Step 610: looking up the first table 205A for packet P2 to obtain information of at least one overlay station, and simultaneously looking up the second table 205B for packet P1 to obtain information of at least one underlay station;
Step 615: selecting a specific overlay path/tree for packet P2 and simultaneously selecting a specific underlay path/tree for packet P1;
Step 620: obtaining information of an overlay next hop station for packet P2 and simultaneously obtaining information of an underlay next hop station for packet P1; and
Step 625: performing packet encapsulation and transmission for each packet P1 and P2 based on information of corresponding overlay/underlay next hop stations.

As shown in FIG. 6, the dotted line means that the flow goes to Step 610 to look up another forwarding table for underlay network after Step 620 for each packet such as P1. That is, taking an example of packet P1, Steps 605-620 are performed sequentially to find information of overlay next hop station, and then flow goes back to sequentially perform Steps 610-620 to find information of underlay next hop station. In addition, the packet P2 follows the packet P1, and the first and second tables 205A & 205B are implemented by the dual-port memory device. The system 600 can simultaneously access the first and second tables. Thus, the system 600 can looking up the second table 205B for the previous packet P1 to obtain information of underlay station (s) and simultaneously looking up the first table 205A for the next packet P2 to obtain information of overlay station(s).

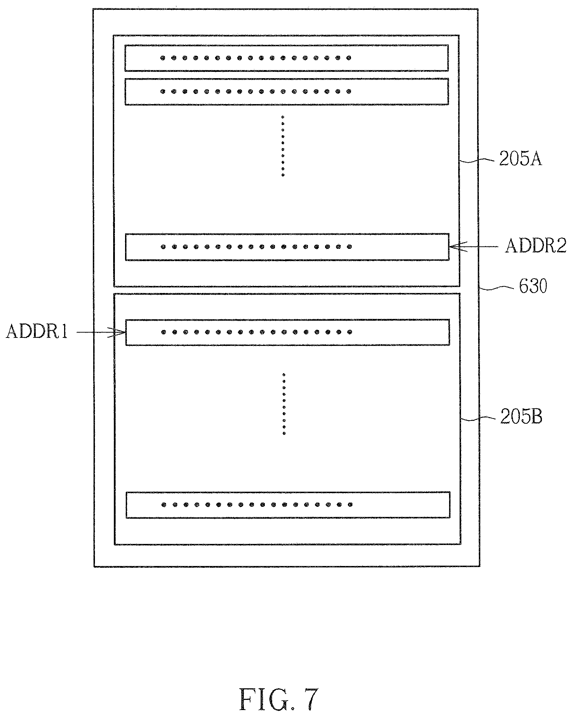

Please refer to FIG. 7, which is a diagram showing the dual-port memory device 630 comprising first and second tables 205A & 205B according to an embodiment. As shown in FIG. 7, the dual-port memory device 630 comprises two portions where the upper portion can be used for storing information of first table 205A and the lower portion can be used for storing information of second table 205B. For example, the controller 210 can look up the first table 205A by a memory address ADDR2 and simultaneously look up the second table 205B by another memory address ADDR1. In addition, the system 600 can select/determine the specific underlay forwarding path/tree for the previous packet P1 and simultaneously select/determine the specific overlay forwarding path/tree for next packet P2. In addition, the system 600 can obtain information of an underlay next hop station for the previous packet P1 and simultaneously obtain information of an overlay next hop station for the next packet P2. For each packet, after information of corresponding overlay and underlay next hop stations have been collected, the system 600 is arranged for performing packet encapsulation and transmission. It should be noted that the system 600 as shown in FIG. 6 can be also implemented by using any one of the embodiments showing FIG. 2 and FIG. 3. Corresponding description is not detailed for brevity.

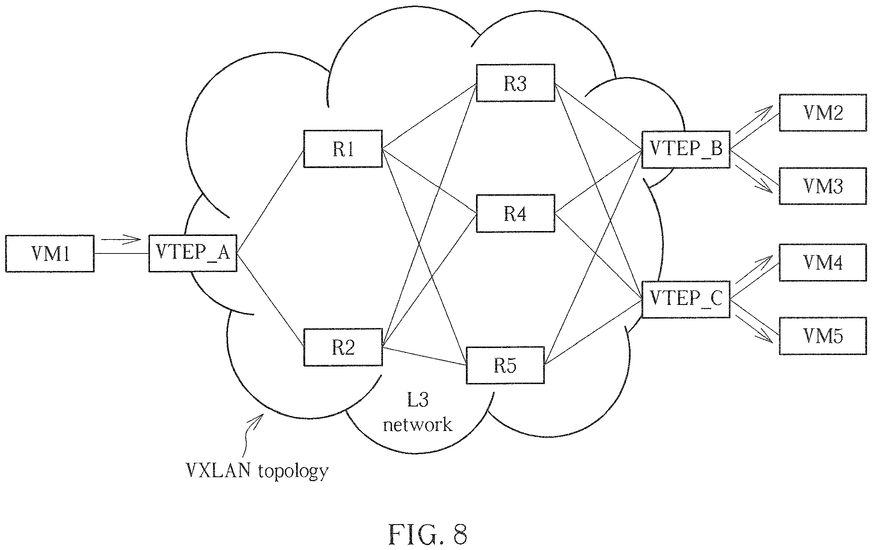

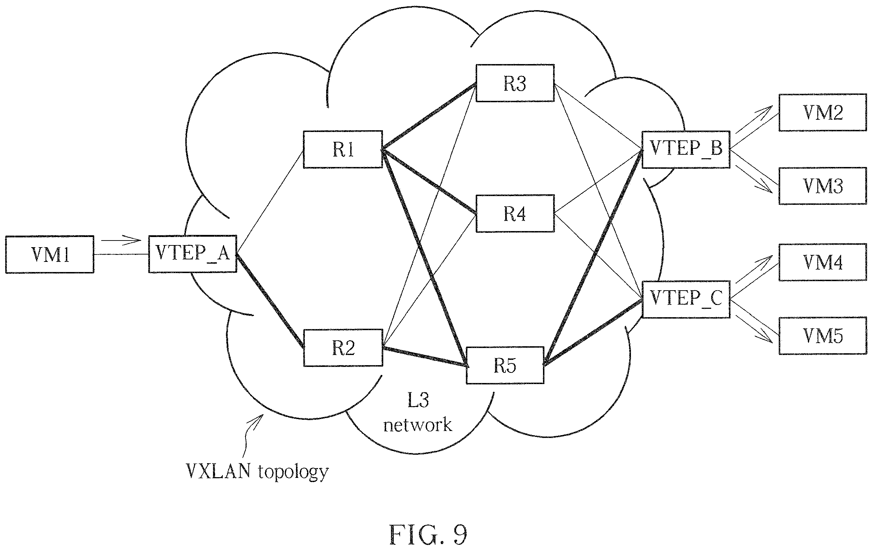

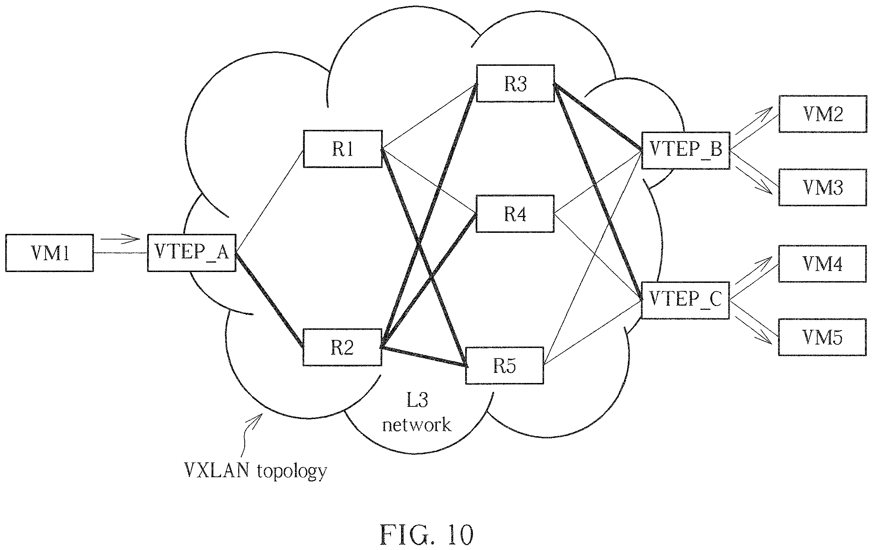

Further, in addition to unicast transmission for packet(s), the system 100/600 can be arranged for processing multicast transmission for packet(s) or traffic flow(s). For multicast transmission, the system 100/600 is arranged for selecting specific overlay and underlay forwarding trees to find/decide information of overlay and underlay next hop stations. In order to clearly describe the operations of processing multicast/broadcast transmission for packet(s), FIGS. 7A-7C are provided. FIG. 8 shows an example scenario of the present invention for multicast transmission of packets on L3 network topology. FIG. 9 and FIG. 10 respectively show examples of different forwarding trees for multicast transmission. As shown in FIG. 8, this network topology can be provided for Virtual Extensible Local Access Network (VXLAN) with L2 overlay service and for IP global network with L3 underlay service. The virtual machine VM1 is arranged to send a multicast traffic to remote virtual machines VM2-VM5 within the same L2 domain. The system 100/600 is applied into VXLAN tunnel end points VTEP_A, VTEP_B, and VTEP_C for providing tunnel end point function of VXLAN tunnel. For example, the VXLAN tunnel end point VTEP_A is used for encapsulating the multicast traffic sent from virtual machine VM1 into a multicast VXLAN tunnel and routing/forwarding VXLAN packets through a multicast tree (i.e. a specific underlay forwarding tree) in the transport L3 network.

Specifically, as shown in FIG. 8, the VXLAN tunnel end point VTEP_A is connected between virtual machine VM1 and the cloud network (transport L3 network), and VXLAN tunnel end points VTEP_B, VTEP_C are respectively connected between virtual machines VM2-VM3 & VM4-VM5 and the cloud network. The cloud network comprises multiple transit routers R1-R5. For the undelay network structure, VXLAN tunnel end points VTEP_A, VTEP_B, VTEP_C are used as roles of transit routers like R1-R5. For the overlay network structure, VXLAN tunnel end points VTEP_A, VTEP_B, VTEP_C are used as roles of tunnel end points for performing tunnel initiation and termination. For example, for multicast transmission of traffic flows, the VXLAN tunnel end point VTEP_A as an ingress point can perform tunnel initiation with the VXLAN tunnel end points VTEP_B and VTEP_C to establish a multicast VXLAN tunnel. For example, a multicast traffic flow may be generated from virtual machine VM1 to multiple remote destinations such as virtual machines VM2-VM5.

Taking an example of VXLAN tunnel end point VTEP_A, the system 100 (or controller 210) is arranged to run on VXLAN tunnel end point VTEP_A. The controller 210 receives packet (s) of the multicast traffic flow. The controller 210 then looks up the first table 205A according to the destinations (i.e. virtual machines VM2-5) to transmit the packet, to obtain forwarding information of at least one overlay station. In this example, the controller 210 obtains information of two overlay stations, i.e. VXLAN tunnel end points VTEP_B and VTEP_C. The controller 210 knows that the packet can be sent to the virtual machines VM2-VM5 via both VTEP_B and VTEP_C. For VXLAN tunnel end point VTEP_A, an overlay forwarding tree is formed and this tree comprises a branch from VTEP_A to VTEP_B and a branch from VTEP_A to VTEP_C. That is, the controller 210 can perform multicast transmission on the overlay network structure. The controller 210 selects the overlay forwarding tree as the specific overlay tree since only one single tree is formed/found.

Alternatively, the controller 210 may select a least-cost forwarding tree as the specific overlay tree if multiple forwarding trees are formed or found. Alternatively, the controller 210 may select an equal-cost forwarding tree as the specific overlay tree based on load-balancing scheme and/or load sharing schemes if costs of the multiple forwarding trees are identical. Then, based on the determined specific overlay tree, the controller 210 obtains information (e.g. index and/or address) of overlay next hop station(s) such as VTEP_B and VTEP_C. It should be noted that the overlay next hop station(s) may be another VXLAN tunnel end point(s) in another scenario if the determined specific overlay tree comprises intermediate VXLAN tunnel end point(s).

After obtaining the information (e.g. index, identifier (s) and/or address) of the overlay next hop station(s) such as VTEP_B and VTEP_C, the controller 210 looks up the second table 205B according to the information of overlay next hop station(s) VTEP_B and VTEP_C, to obtain information of at least one underlay station. The at least one underlay station forms at least one underlay forwarding tree. In this scenario, as shown in FIG. 9 and FIG. 10, the controller 210 may find/obtain multiple underlay forwarding trees on the underlay network structure after looking up the second table 205B wherein one underlay forwarding tree is shown in FIG. 9 (represented by bold lines) and another underlay forwarding tree is shown in FIG. 10 (represented by bold lines). The controller 210 knows that the packets can sent to the VXLAN tunnel end points VTEP_B and VTEP_C via any one of the two forwarding trees, and then selects one forwarding tree among the two forwarding trees as the specific underlay tree. The controller 210 may select a least-cost forwarding tree as the specific overlay tree. Alternatively, the controller 210 may dynamically select one of equal-cost forwarding trees as the specific forwarding tree based on load-balancing scheme and/or load sharing schemes if costs of the two forwarding trees are identical. Alternatively, if only single one forwarding tree is found or formed, the controller 210 may select/determine this single one forwarding tree as the specific underlay tree. For example, the controller 210 can decide the forwarding tree of FIG. 9 as the specific underlay tree for packets of a multicast flow, and decide the forwarding tree of FIG. 10 as the specific underlay tree for packets of another different multicast flow. Thus, the VXLAN tunnel end point VTEP_A can provide the capability of encapsulating different multicast flows into different VXLAN multicast tunnels with the same L2 network domain. This introduces better load balancing. After determining the specific underlay tree, the controller 210 can obtain the information of underlay next hop station (s) such as transit router R1 based on the specific underlay tree. Finally, the controller 210 performs packet encapsulation and transmission for packets of multicast flows according to the information of the overlay next hop station (s) (e.g. VTEP_B and VTEP_C) and the information of underlay next hop station(s) (e.g. transit router R1).

It should be noted that the above-mentioned system 100/600 and controller 210 can also be applied for processing packets of broadcast traffic flows. In addition, the system 100/600 and controller 210 can be suitable for network topologies with L2/L3 overlay network service and L2/L3 underlay network service.

Furthermore, the system 100/600 and controller 210 can dynamically update the first table 205A and second table 205B. In addition, the system 100/600 and controller 210 can temporarily cache look-up result (s) of previous packet (s) for first table 205A and second table 205B, and thus can directly obtain information of overlay next hop station(s) and information of underlay next hop station (s) according to the look-up result(s) of previous packet(s) when a destination of an incoming packet is equal to that of the previous packet (s). The corresponding look-up result (s) of previous packet (s) can be cached respectively in the first table 205A and second table 205B or can be cached in another storage device.

## Claims

1. A system (100, 600) running a device within a data center, comprising:
a first table (205A) comprising forwarding information of at least one station corresponding to an overlay network structure;
a second table (205B) comprising forwarding information of at least one station corresponding to an underlay network structure; and
a controller (210), coupled to the first and second tables (205A and 205B), configured for:
receiving a packet;
computing a specific overlay forwarding path or tree and a specific underlay forwarding path or tree according to the first table (205A), the second table (205B), and a destination to transmit the packet;
obtaining information of an overlay next hop station and information of an underlay next hop station according to the specific overlay forwarding path or tree and the specific underlay forwarding path or tree; and
performing packet encapsulation and transmission for the packet according to the information of the overlay next hop station and the information of the underlay next hop station,
**characterized in that**
the first and second tables (205A and 205B) are stored within a single dual-port storage device (630), and the controller (210) is capable of simultaneously looking up the first table (205A) and the second table (205B) within the single dual-port storage device (630), wherein the controller (210) is simultaneously looking up the second table (205B) for a previous packet and the first table (205A) for a next packet.

2. The system (100, 600) of claim 1, **characterized in that** the controller (210) is configured for looking up the first table (205A) according to the destination to transmit the packet, to obtain information of at least one overlay station, selecting the specific overlay forwarding path or or tree among at least one overlay forwarding path or tree formed by the at least one overlay station, and for obtaining the information of the overlay next hop station according to the specific forwarding overlay path or tree.

3. The system (100, 600) of claim 2, **characterized in that** the controller (210) is configured for looking up the second table (205B) according to the information of the overlay next hop station, to obtain information of at least one underlay station, selecting the specific underlay forwarding path or tree among at least one underlay forwarding path or tree formed by the at least one underlay station, and for obtaining the information of the underlay next hop station according to the specific underlay forwarding path or tree.

4. The system (100, 600) of claim 1, **characterized in that** the forwarding information comprised by the first table (205A) and the forwarding information comprised by the second table (205B)correspond to Internet Protocol, IP, addresses or IP identifications, ID, respectively.

5. The system (100, 600) of claim 1, **characterized in that** the forwarding information comprised by the first table (205A) and the forwarding information comprised by the second table (205B) correspond to Media Access Control, MAC, addresses or MAC identifications, respectively.

6. The system (100, 600) of claim 1, **characterized in that** the forwarding information comprised by the first table (205A) complies with one format of IP network specification and MAC network specification, and the forwarding information comprised by the second table (205B) complies with the other format of the IP network specification and MAC network specification.

7. A method used within a data center, comprising:
receiving a packet;
computing a specific overlay forwarding path or tree and a specific underlay forwarding path or tree according to a destination to transmit the packet, a first table (205A), and a second table (205B), wherein the first table (205A) comprises forwarding information of at least one station corresponding to an overlay network structure, and the second table (205B) comprises forwarding information of at least one station corresponding to an underlay network structure;
obtaining information of an overlay next hop station and information of an underlay next hop station according to the specific overlay forwarding path or tree and the specific underlay forwarding path or tree; and
performing packet encapsulation and transmission for the packet according to the information of the overlay next hop station and the information of the underlay next hop station,
**characterized in that**
the first and second tables (205A and 205B) are stored within a single dual-port storage device (630), and the step of computing the specific overlay forwarding path or tree and the specific underlay forwarding path or tree comprises:
simultaneously looking up the first table (205A) and the second table (205B) within the single dual-port storage device (630), wherein the second table (205B) for a previous packet and the first table (205A) for a next packet are simultaneously looked up.

8. The method of claim 7, **characterized in that** the step of computing the specific overlay forwarding path or tree comprises:
looking up the first table (205A) according to the destination to transmit the packet, to obtain information of at least one overlay station; and
selecting the specific overlay forwarding path or tree among at least one overlay forwarding path or tree formed by the at least one overlay station; and
the step of obtaining the information of the overlay next hop station comprises:
obtaining the information of the overlay next hop station according to the specific overlay forwarding path or tree.

9. The method of claim 8, **characterized in that** the step of computing the specific underlay forwarding path or tree comprises:
looking up the second table (205B) according to the information of the overlay next hop station, to obtain information of at least one underlay station; and
selecting the specific underlay forwarding path or tree among at least one underlay forwarding path or tree formed by the at least one underlay station; and
the step of obtaining the information of the underlay next hop station comprises:
obtaining the information of the underlay next hop station according to the specific underlay forwarding path or tree.

10. The method of claim 7, further **characterized by**:
providing Internet Protocol, IP, addresses or IP identifications, ID, as the forwarding information comprised by the first table (205A) and the forwarding information comprised by the second table (205B), respectively.

11. The method of claim 7, further **characterized by**:
providing Medial Access Control, MAC, addresses or MAC identifications as the forwarding information comprised by the first table (205A) and the forwarding information comprised by the second table (205B), respectively.

12. A controller (210) used by a system (100, 600) running a device within a data center, comprising:
a processing circuit (215), configured for receiving a packet, computing a specific overlay forwarding path or tree and a specific forwarding underlay path or tree according to a destination to transmit the packet, a first table (205A), and a second table (205B), obtaining information of an overlay next hop station and information of an underlay next hop station according to the specific overlay forwarding path or tree and the specific underlay forwarding path or tree, and performing packet encapsulation for the packet according to the information of the overlay next hop station and the information of the underlay next hop station; and
an output circuit (220), coupled to the processing circuit (215), configured for transmitting the encapsulated packet;
wherein the first table (205A) comprises forwarding information of at least one station corresponding to an overlay network structure, and the second table (205B) comprises forwarding information of at least one station corresponding to an underlay network structure,
**characterized in that**
the first and second tables (205A and 205B) are stored within a single dual-port storage device (630), and the controller (210) is capable of simultaneously looking up the first table (205A) and the second table (205B) within the single dual-port storage device (630), wherein the controller (210) is simultaneously looking up the second table (205B) for a previous packet and the first table (205A) for a next packet.

13. The controller (210) of claim 12 **characterized in that** the controller (210) is disposed within a single integrated circuit chip.

## Patentansprüche

1. System (100, 600), das ein Gerät in einem Datencenter betreibt, umfassend:
eine erste Tabelle (205A) umfassend Weiterleitungsinformation mindestens einer Station korrespondierend zu einer Overlay-Netzwerk Struktur;
eine zweite Tabelle (205B) umfassend Weiterleitungsinformation mindestens einer Station korrespondierend zu einer Underlay-Netzwerk Struktur; und
eine Steuereinheit (210) verbunden mit der ersten und der zweiten Tabelle (205A und 205B), eingerichtet:
ein Paket zu empfangen;
einen spezifischen Overlay-Weiterleitungspfad oder-baum und einen spezifischen Underlay-Weiterleitungspfad oder -baum gemäß der ersten Tabelle (205A), der zweiten Tabelle (205B) und ein Paketübertragungsziel, zu errechnen;
Informationen einer nächsten Overlay-Etappenstation und Information einer nächsten Underlay Etappen-Station gemäß dem spezifischen Overlay-Weiterleitungspfad oder-baum und dem spezifischen Underlay-Weiterleitungspfad oder-baum zu erhalten; und
Paketverkapselung und Senden für das Paket gemäß den Informationen der nächsten Overlay-Etappenstation und der Information der nächsten Underlay Etappen-Station, durchzuführen,
**dadurch gekennzeichnet, dass**
die erste und die zweite Tabelle (205A und 205B) in einem einzelnen Dual-Port Speichergerät (630) gespeichert sind, und die Steuereinheit (210) eingerichtet ist, simultan in der ersten Tabelle (205A) und in der zweiten Tabelle (205B) innerhalb eines einzelnen Dual-Port Speichergerätes (630) simultan zu durchsuchen, wobei die Steuereinheit (210) in der zweiten Tabelle (205B) nach einem vorherigen Paket und in der ersten Tabelle (205A) nach einem nächsten Paket sucht.

2. System (100, 600) nach Anspruch 1, **dadurch gekennzeichnet, dass** die Steuereinheit (210) eingerichtet, ist in der ersten Tabelle (205A), gemäß dem Paketübertragungsziel zu suchen, Informationen mindestens einer Overlay-Station zu erhalten, den spezifischen Overlay-Weiterleitungspfad oder-baum aus mindestens einem Overlay-Weiterleitungspfad oder-baum, gebildet durch die mindestens eine Overlay Station auszuwählen, und die Information von der nächsten Overlay-Etappenstation gemäß dem spezifischen Overlay-Weiterleitungspfad oder-baum zu erhalten.

3. System (100, 600) nach Anspruch 2, **dadurch gekennzeichnet, dass** die Steuereinheit (210) eingerichtet, ist in der zweiten Tabelle (205B) gemäß dem Information von der nächsten Overlay-Etappenstation zu suchen, um Informationen mindestens einer Underlay-Station zu erhalten, den spezifischen Underlay-Weiterleitungspfad oder-baum aus mindestens einem Underlay-Weiterleitungspfad oder-baum, gebildet durch die mindestens eine Underlay Station auszuwählen, und die Information von der nächsten Underlay-Etappenstation gemäß dem spezifischen Underlay-Weiterleitungspfad oder-baum zu erhalten.

4. System (100, 600) nach Anspruch 1, **dadurch gekennzeichnet, dass** die Weiterleitungsinformation enthalten in der ersten Tabelle (205A) und die Weiterleitungsinformation enthalten in der zweiten Tabelle (205B) jeweils zu Internet Protokoll, IP, Adressen oder IP Identifikationen, ID, korrespondieren.

5. System (100, 600) nach Anspruch 1, **dadurch gekennzeichnet, dass** die Weiterleitungsinformation enthalten in der ersten Tabelle (205A) und die Weiterleitungsinformation enthalten in der zweiten Tabelle (205B) jeweils zu Media Access Control, MAC, Adressen oder MAC Identifikationen korrespondieren.

6. System (100, 600) nach Anspruch 1, **dadurch gekennzeichnet, dass** die Weiterleitungsinformation enthalten in der ersten Tabelle (205A) ein Format von IP Netzwerkspezifikationen und MAC Netzwerkspezifikationen erfüllt, und die Weiterleitungsinformation enthalten in der zweiten Tabelle (205B) das andere Format von IP Netzwerkspezifikationen und MAC Netzwerkspezifikationen erfüllt.

7. Verfahren genutzt in einem Datacenter, umfassend:
Empfangen eines Paketes;
Errechnen eines spezifischen Overlay-Weiterleitungspfads oder-baums und eines spezifischen Underlay-Weiterleitungspfads oder-baums gemäß einem Paketübertragungsziel, einer ersten Tabelle (205A) und einer zweiten Tabelle (205B), wobei die erste Tabelle (205A) Weiterleitungsinformationen von mindestens einer Station korrespondierend zu einer Overlay-Netzwerkstruktur enthält, und die zweite Tabelle (205B) Weiterleitungsinformationen von mindestens einer Station korrespondierend zu einer Underlay-Netzwerkstruktur enthält;
Erhalten von Informationen einer nächsten Overlay-Etappenstation und Informationen einer nächsten Underlay Etappen-Station gemäß dem spezifischen Overlay-Weiterleitungspfad oder-baum und dem spezifischen Underlay-Weiterleitungspfad oder-baum;
Durchführen von Paketverkapselung und Senden für das Paket gemäß der Information der nächsten Overlay-Etappenstation und der Information der nächsten Underlay Etappen-Station,
**dadurch gekennzeichnet, dass**
die erste und die zweite Tabelle (205A und 205B) in einem einzelnen Dual-Port Speichergerät (630) gespeichert sind, und der Schritt des Errechnens des spezifischen Overlay-Weiterleitungspfads oder-baums und des spezifischen Underlay-Weiterleitungspfads oder-baums umfasst:
simultanes Suchen in der ersten Tabelle (205A) und in der zweiten Tabelle (205B) innerhalb eines einzelnen Dual-Port Speichergerätes (630), wobei in der zweiten Tabelle (205B) nach einem vorherigen Paket und in der ersten Tabelle (205A) nach einem nächsten Paket simultan gesucht wird.

8. Verfahren nach Anspruch 7, **dadurch gekennzeichnet, dass** der Schritt des Errechnens des spezifischen Overlay-Weiterleitungspfads oder-baums umfasst:
Suchen in einer ersten Tabelle (205A) gemäß dem Paketübertragungsziel, um Informationen von mindestens einer Overlay-Station zu erhalten; und
Auswählen des spezifischen Overlay-Weiterleitungspfads oder-baums aus mindestens einem Overlay-Weiterleitungspfad oder-baum, gebildet durch die mindestens eine Overlay Station; und
der Schritt des Erhaltens der Information der nächsten Overlay-Etappenstation umfasst:
Erhalten der Information der nächsten Overlay-Etappenstation gemäß dem spezifischen Overlay-Weiterleitungspfad oder -baum.

9. Verfahren nach Anspruch 8, **dadurch gekennzeichnet, dass** der Schritt des Errechnens des spezifischen Underlay-Weiterleitungspfads oder-baums umfasst:
Suchen in einer zweiten Tabelle (205B), gemäß der Information der nächsten Overlay-Etappenstation, um Informationen von mindestens einer Underlay-Station zu erhalten; und
Auswählen des spezifischen Underlay-Weiterleitungspfads oder-baums aus mindestens einem Underlay-Weiterleitungspfad oder-baum, gebildet durch die mindestens eine Underlay Station; und
der Schritt des Erhaltens der Information der nächsten Underlay-Etappenstation umfasst:
Erhalten der Information der nächsten Underlay-Etappenstation gemäß dem spezifischen Underlay-Weiterleitungspfad oder-baum.

10. Verfahren nach Anspruch 7, weiter **gekennzeichnet durch**
jeweils Bereitstellen von Internet Protokoll, IP, Adressen oder IP Identifikationen, ID, als die Weiterleitungsinformation enthalten in der ersten Tabelle (205A) und als die Weiterleitungsinformation enthalten in der zweiten Tabelle (205B).

11. Verfahren nach Anspruch 7, weiter **gekennzeichnet durch**
jeweils Bereitstellen von Media Access Control, MAC, Adressen oder MAC Identifikationen als die Weiterleitungsinformation enthalten in der ersten Tabelle (205A) und als die Weiterleitungsinformation enthalten in der zweiten Tabelle (205B).

12. Steuereinheit (210) genutzt von einem System (100, 600) das ein Gerät in einem Datencenter betreibt, umfassend:
eine Verarbeitungseinheit (215), eingerichtet ein Paket zu empfangen, einen spezifischen Overlay-Weiterleitungspfad oder-baum und einen spezifischen Underlay-Weiterleitungspfad oder-baum gemäß einem Paketübertragungsziel einer ersten Tabelle (205A), und einer zweite Tabelle (205B) zu berechnen, Informationen von einer nächsten Overderlay-Etappenstation und Informationen von einer nächsten Underderlay-Etappenstation, gemäß dem spezifischen Overlay-Weiterleitungspfad oder-baum und dem spezifischen Underlay-Weiterleitungspfad oder -baum zu erhalten, und Paketverkapselung für das Paket gemäß der Information der nächsten Overlay-Etappenstation und der Information der nächsten Underlay Etappen-Station durchzuführen; und
ein Ausgangsschaltkreis (220), verbunden mit der Verarbeitungseinheit (215), eingerichtet das eingekapselte Paket zu übertragen;
wobei die erste Tabelle (205A) Weiterleitungsinformation mindestens einer Station korrespondierend zu einer Overlay-Netzwerk Struktur umfasst, und die zweite Tabelle (205B) Weiterleitungsinformation mindestens einer Station korrespondierend zu einer Underlay-Netzwerk Struktur umfasst,
**dadurch gekennzeichnet, dass**
die erste und die zweite Tabelle (205A und 205B) in einem einzelnen Dual-Port Speichergerät (630) gespeichert sind, und die Steuereinheit (210) eingerichtet ist, in der ersten Tabelle (205A) und in der zweiten Tabelle (205B) innerhalb eines einzelnen Dual-Port Speichergerätes (630) simultan zu suchen, wobei die Steuereinheit (210) simultan in der zweiten Tabelle (205B) nach einem vorherigen Paket und in der ersten Tabelle (205A) nach einem nächsten Paket nachschlägt.

13. Steuereinheit (210) nach Anspruch 12 **dadurch gekennzeichnet, dass** die Steuereinheit (210) innerhalb eines einzelnen integrierten Schaltungschip angeordnet ist.

## Revendications

1. Système (100, 600) faisant fonctionner un dispositif dans un centre de données, comprenant :
une première table (205A) comprenant des informations d'acheminement d'au moins une station correspondant à une structure de réseau superposé ;
une deuxième table (205B) comprenant des informations d'acheminement d'au moins une station correspondant à une structure de réseau sous-jacent ; et
un dispositif de commande (210), couplé aux première et deuxième tables (205A et 205B), configuré :
pour recevoir un paquet ;
pour calculer un chemin ou un arbre d'acheminement superposé spécifique et un chemin ou un arbre d'acheminement sous-jacent spécifique en fonction de la première table (205A), de la deuxième table (205B), et d'une destination à laquelle le paquet est transmis ;
pour obtenir des informations d'une station superposée de bond suivant et des informations d'une station sous-jacente de bond suivant en fonction du chemin ou de l'arbre d'acheminement superposé spécifique et du chemin ou de l'arbre d'acheminement sous-jacent spécifique ; et
pour effectuer l'encapsulation et la transmission de paquet pour le paquet en fonction des informations de la station superposée de bond suivant et des informations de la station sous-jacente de bond suivant,
**caractérisé en ce que**
les première et deuxième tables (205A et 205B) sont stockées dans un dispositif de stockage à double port unique (630), et le dispositif de commande (210) est capable de consulter simultanément la première table (205A) et la deuxième table (205B) dans le dispositif de stockage à double port unique (630), où le dispositif de commande (210) consulte simultanément la deuxième table (205B) pour un paquet précédent et la première table (205A) pour un paquet suivant.

2. Système (100, 600) de la revendication 1, **caractérisé en ce que** le dispositif de commande (210) est configuré pour consulter la première table (205A) en fonction de la destination à laquelle le paquet est transmis, afin d'obtenir des informations d'au moins une station superposée, pour sélectionner le chemin ou l'arbre d'acheminement superposé spécifique parmi au moins un chemin ou un arbre d'acheminement superposé formé par l'au moins une station superposée, et pour obtenir les informations de la station superposée de bond suivant en fonction du chemin ou de l'arbre d'acheminement superposé spécifique.

3. Système (100, 600) de la revendication 2, **caractérisé en ce que** le dispositif de commande (210) est configuré pour consulter la deuxième table (205B) en fonction des informations de la station superposée de bond suivant, afin d'obtenir des informations d'au moins une station sous-jacente, pour sélectionner le chemin ou l'arbre d'acheminement sous-jacent spécifique parmi au moins un chemin ou un arbre d'acheminement sous-jacent formé par l'au moins une station sous-jacente et pour obtenir les informations de la station sous-jacente de bond suivant en fonction du chemin ou de l'arbre d'acheminement sous-jacent spécifique.

4. Système (100, 600) de la revendication 1, **caractérisé en ce que** les informations d'acheminement contenues dans la première table (205A) et les informations d'acheminement contenues dans la deuxième table (205B) correspondent à des adresses de Protocole Internet, IP, ou à des identifications IP, ID, respectivement.

5. Système (100, 600) de la revendication 1, **caractérisé en ce que** les informations d'acheminement contenues dans la première table (205A) et les informations d'acheminement contenues dans la deuxième table (205B) correspondent à des adresses de Contrôle d'Accès au Support, MAC, ou à des Identifications MAC, respectivement.

6. Système (100, 600) de la revendication 1, **caractérisé en ce que** les informations d'acheminement contenues dans la première table (205A) sont conformes à un format de spécification de réseau IP et à une spécification de réseau MAC, et les informations d'acheminement contenues dans la deuxième table (205B) sont conformes à l'autre format de la spécification de réseau IP et à la spécification de réseau MAC.

7. Procédé utilisé dans un centre de données, comprenant le fait :
de recevoir un paquet ;
de calculer un chemin ou un arbre d'acheminement superposé spécifique et un chemin ou un arbre d'acheminement sous-jacent spécifique en fonction d'une destination à laquelle le paquet est transmis, d'une première table (205A) et d'une deuxième table (205B), où la première table (205A) comprend des informations d'acheminement d'au moins une station correspondant à une structure de réseau superposé, et la deuxième table (205B) comprend des informations d'acheminement d'au moins une station correspondant à une structure de réseau sous-jacent ;
d'obtenir des informations d'une station superposée de bond suivant et des informations d'une station sous-jacente de bond suivant en fonction du chemin ou de l'arbre d'acheminement superposé spécifique et du chemin ou de l'arbre d'acheminement sous-jacent spécifique ; et
d'effectuer l'encapsulation et la transmission de paquet pour le paquet en fonction des informations de la station superposée de bond suivant et des informations de la station sous-jacente de bond suivant,
**caractérisé en ce que**
les première et deuxième tables (205A et 205B) sont stockées dans un dispositif de stockage à double port unique (630), et l'étape consistant à calculer le chemin ou l'arbre d'acheminement superposé spécifique et le chemin ou l'arbre d'acheminement sous-jacent spécifique comprend le fait :
de consulter simultanément la première table (205A) et la deuxième table (205B) dans le dispositif de stockage à double port unique (630), où la deuxième table (205B) pour un paquet précédent et la première table (205A) pour un paquet suivant sont consultées simultanément.

8. Procédé de la revendication 7, **caractérisé en ce que** l'étape consistant à calculer le chemin ou l'arbre d'acheminement superposé spécifique comprend le fait :
de consulter la première table (205A) en fonction de la destination à laquelle le paquet est transmis, pour obtenir des informations d'au moins une station superposée ; et
de sélectionner le chemin ou l'arbre d'acheminement superposé spécifique parmi au moins un chemin ou un arbre d'acheminement superposé formé par l'au moins une station superposée ; et
l'étape consistant à obtenir les informations de la station superposée de bond suivant comprend le fait :
d'obtenir les informations de la station superposée de bond suivant selon le chemin ou l'arbre d'acheminement superposé spécifique.

9. Procédé de la revendication 8, **caractérisé en ce que** l'étape consistant à calculer le chemin ou l'arbre d'acheminement sous-jacent spécifique comprend le fait
de consulter la deuxième table (205B) en fonction des informations de la station superposée de bond suivant, pour obtenir des informations d'au moins une station sous-jacente ; et
de sélectionner le chemin ou l'arbre d'acheminement sous-jacent spécifique parmi au moins un chemin ou un arbre d'acheminement sous-jacent formé par l'au moins une station sous-jacente ; et
l'étape consistant à obtenir les informations de la station sous-jacente de bond suivant comprend le fait :
d'obtenir les informations de la station sous-jacente de bond suivant en fonction du chemin ou de l'arbre d'acheminement sous-jacent spécifique.

10. Procédé de la revendication 7, **caractérisé en outre par** le fait :
de fournir des adresses de Protocole Internet, IP, ou des identifications IP, ID, comme étant les informations d'acheminement contenues dans la première table (205A) et les informations d'acheminement contenues dans la deuxième table (205B), respectivement.

11. Procédé de la revendication 7, **caractérisé en outre par** le fait :
de fournir des adresses de Contrôle d'Accès au Support, MAC, ou des Identifications MAC, comme étant les informations d'acheminement contenues dans la première table (205A) et les informations d'acheminement contenues dans la deuxième table (205B), respectivement.

12. dispositif de commande (210) utilisé par un système (100, 600) faisant fonctionner un dispositif dans un centre de données, comprenant :
un circuit de traitement (215), configuré pour recevoir un paquet, pour calculer un chemin ou un arbre d'acheminement superposé spécifique et un chemin ou un arbre d'acheminement sous-jacent spécifique en fonction d'une destination à laquelle le paquet est transmis, d'une première table (205A), et d'une deuxième table (205B), pour obtenir des informations d'une station superposée de bond suivant et des informations d'une station sous-jacente de bond suivant en fonction du chemin ou de l'arbre d'acheminement superposé spécifique et du chemin ou de l'arbre d'acheminement sous-jacent spécifique, et pour effectuer l'encapsulation de paquet pour le paquet en fonction des informations de la station superposée de bond suivant et des informations de la station sous-jacente de bond suivant ; et
un circuit de sortie (220), couplé au circuit de traitement (215), configuré pour transmettre le paquet encapsulé ;
dans lequel la première table (205A) comprend des informations d'acheminement d'au moins une station correspondant à une structure de réseau superposé, et la deuxième table (205B) comprend des informations d'acheminement d'au moins une station correspondant à une structure de réseau sous-jacent,
**caractérisé en ce que**
les première et deuxième tables (205A et 205B) sont stockées dans un dispositif de stockage à double port unique (630), et le dispositif de commande (210) est capable de consulter simultanément la première table (205A) et la deuxième table (205B) dans le dispositif de stockage à double port unique (630), où le dispositif de commande (210) consulte simultanément la deuxième table (205B) pour un paquet précédent et la première table (205A) pour un paquet suivant.

13. Dispositif de commande (210) de la revendication 12, **caractérisé en ce que** le dispositif de commande (210) est disposé dans une puce de circuit intégré unique.
